# EUROPÄISCHE PATENTSCHRIFT

(11) **EP 2 079 628 B1**
(45) Veröffentlichungstag und Bekanntmachung des Hinweises auf die Patenterteilung: **17.11.2010**
(21) Anmeldenummer: 07819161.6
(22) Anmeldetag: 19.10.2007
(51) Int. Cl.: B62D 55/10

(54) **KETTENFAHRZEUG**
TRACKED VEHICLE
VÉHICULE À CHENILLES

(30) Priorität: 20.10.2006 DE 102006050977
(43) Veröffentlichungstag der Anmeldung: 22.07.2009
(73) Patentinhaber: Kässbohrer Geländefahrzeug AG, 88471 Laupheim (DE)
(72) Erfinder: KANZLER, Helmut, 89269 Illerberg (DE)
(74) Vertreter: Patentanwälte Ruff, Wilhelm, Beier, Dauster & Partner
(86) Internationale Anmeldenummer: PCT/EP2007/009096
(87) Internationale Veröffentlichungsnummer: WO 2008/046646

(56) Entgegenhaltungen:
- EP-A- 0 823 369
- US-A- 3 756 667
- US-A- 3 781 067
- US-A- 3 887 243

## Beschreibung

### Anwendungsgebiet und Stand der Technik

Die Erfindung betrifft ein Raupenfahrzeug, insbesondere zum Präparieren von Skipisten, nach dem Oberbegriff von Anspruch 1.

Raupenfahrzeuge sind aus dem Stand der Technik allgemein bekannt. Ein solches Fahrzeug ist z.B. in der DE 86 17 103 U1 beschrieben. Der Kettenantrieb hat gegenüber einem Radantrieb den Vorteil, dass die Auflagefläche des Fahrzeugs wesentlich größer ist. Dies vermindert die Flächenpressung und wirkt insbesondere auf lockerem Grund einem Einsinken des Fahrzeugs in den Untergrund entgegen.

Aus der DE 69 908 558 T2 ist ein Schneemobil bekannt, welches über eine einzelne Kette angetrieben wird. Beidseitig der Kette sind Eiskufen vorgesehen, die im Normalbetrieb von der Kette beabstandet sind. Der Zweck dieser Eiskufen scheint zu sein, ein Abgleiten der Kette bei einer einseitigen Belastung zu verhindern. Wenn die Kette stark einseitig belastet wird, kommt sie in Kontakt mit einer der Eiskufen, bis die einseitige Belastung wieder entfällt.

Als nachteilig an den aus dem Stand der Technik bekannten Raupenfahrzeugen wird angesehen, dass die Flächenpressung trotz der Ketten nicht gleichmäßig verteilt ist, sondern im Bereich der Räder deutlich größer ist als in dazwischenliegenden Kettenbereichen. Dies führt bei Fahrten auf nichtfestem Gelände, insbesondere auf Schnee, zu Schlupf zwischen den Ketten und dem Untergrund.

Aus der US 3,887,243 ist ein gattungsgemäßes Kettenfahrzeug bekannt, welches Gleitschienen am Kettenlaufwerk aufweist. Diese Gleitschienen wirken mit kettenseitigen Gleitelementen derart zusammen, dass die Gleitschienen auf jenem Teil der Kette aufliegen, der gerade in Bodenkontakt ist, so dass das Fahrzeug über die am Fahrzeugchassis angebrachten Gleitschienen gestützt wird.

### Aufgabe und Lösung

Aufgabe der Erfindung ist es, ein gattungsgemäßes Raupenfahrzeug dahingehend weiterzubilden, dass die Reibung an der Kette verringert wird.

Erfindungsgemäß ist wird dies durch ein Kettenfahrzeug nach Anspruch 1 erreicht.

Die Auflageschienen befinden sich während des bestimmungsgemäßen Gebrauchs stets in Kontakt mit mindestens einem Teil des Kontaktabschnitts des bodenseitigen Kettenabschnitts. Bei einer Fahrt über ebenen oder annähernd ebenen Untergrund, wie es bei Skipisten in der Regel der Fall ist, sind die Auflageschienen weitgehend über ihre vollständige Länge in Kontakt mit dem bodenseitigen Kettenabschnitt. Die Gewichtskraft des Fahrzeugs kann dadurch auf einer besonders großen Fläche in den Boden eingeleitet werden, so dass das Fahrzeug einen besonders sicheren Halt auch auf weichem Untergrund hat. Im Kontaktabschnitt des bodenseitigen Kettenabschnitts wird zudem eine einheitliche Ausrichtung der Kettenglieder erreicht. Dies ist insbesondere von Vorteil, wenn an den Kettengliedern Kettenstege angebracht sind, die zum Eindringen in den Untergrund vorgesehen sind. Die Kettenstege, die sich üblicherweise von den Kettengliedern radial nach außen erstrecken, befinden sich bezüglich der Kettenglieder des Kontaktabschnitts in einer idealen Ausrichtung, bei der die Kettenstege senkrecht in den Untergrund ragen und dem Fahrzeug somit einen guten Halt geben.

Die Ausgestaltung mit den an der Kette vorgesehenen drehbaren Rollen dient der Verminderung der Reibung an den Auflageelementen. Die Auflageelemente, die vorzugsweise jeweils einem Kettenglied zugeordnet und mit diesem fest verbunden sind, führen durch die Rollen zu einem verminderten Verschleiß an den Auflageschienen. Die Rollen weisen vorzugsweise eine Breite auf, die in etwa gleich groß wie die Breite der Auflageschienen ist. Sie sind vorzugsweise mittels einfacher Gleitlager an den Auflageelementen gelagert. Bei einer besonderen Ausgestaltung können auch mehrere koaxial nebeneinander angeordnete Rollen oder mehrere parallel nebeneinander angeordnete Rollen je Auflageelement vorgesehen sein. Die Gestaltung mit mehreren, vorzugsweise zwei, koaxialen Rollen dient der Vermeidung von Durchbiegungen der Rollen durch die Gewichtskraft des Fahrzeugs. Die Gestaltung mit zwei oder mehr parallelen Rollen je Auflageelement wirkt einem Einknicken der Auflageelemente unter dem Einfluss der von der Auflageschiene eingeleiteten Fahrzeuggewichtskraft entgegen.
Bei den Rollen handelt es sich vorzugsweise um wälzlagergelagerte Gummirollen, die vorzugsweise einen Durchmesser zwischen 1 cm und 5 cm und einen Abstand zueinander zwischen 2 cm und 20 cm aufweisen. Es sind aber auch größere Rollendurchmesser und Rollenabstände denkbar und abhängig von der konkreten Ausgestaltung zweckmäßig.

Erfindungsgemäße Raupenfahrzeuge mit Auflageschienen weisen eine Standfestigkeit und eine Traktion an Hängen auf, die signifikant besser ist bei Raupenfahrzeugen mit Laufrädern. Im Fahrbetrieb wird der bei den aus dem Stand der Technik bekannten Raupenfahrzeugen übliche Schlupf auf Schneeuntergrund auf ein Minimum reduziert. Je nach konkreten Untergrundbedingungen und Ausgestaltung der Auflageschienen entfällt der Schlupf auch vollständig. Die Steigfähigkeit ist deutlich verbessert, wobei die Beschädigung der Schneefläche durch den vermindernden Schlupf gering gehalten wird. Der verminderte Schlupf führt darüber hinaus zu einer deutlich erhöhten Fahrgeschwindigkeit bzw. Arbeitsgeschwindigkeit des Raupenfahrzeugs und zu einem verminderten Verschleiß durch Reibung zwischen Kette und Untergrund.

Die Auflageschienen sind vorzugsweise zur Einleitung von mindestens 50% der Gewichtskraft des Fahrzeugs in die bodenseitigen Kettenabschnitte ausgebildet. Vorzugsweise beträgt der Anteil der Gewichtskraft, der über die Auflageschienen in die bodenseitigen Kettenabschnitte und damit in den Boden eingeleitet wird, 80% oder mehr. Die angegebenen Werte beziehen sich jeweils auf die Gesamtheit aller Auflageschienen und den angenommenen Fall eines planen und unnachgiebigen Untergrundes. Je höher der Anteil der Gewichtskraft ist, der über die Auflageschienen in den Boden eingeleitet wird, desto vorteilhafter sind die Fahreigenschaften des Raupenfahrzeugs und desto weniger wird eine durch das Raupenfahrzeug bearbeitete Schneeoberfläche nachteilig beeinflusst. Besonders bevorzugt ist eine Ausgestaltung, bei der lediglich ein vernachlässigbarer Gewichtsanteil von weniger als 5% über die Führungs- und/oder Antriebsräder in den Boden eingeleitet wird. Dieser vernachlässigbare Anteil wird vorzugsweise ausschließlich über die Führungsräder in den Boden eingeleitet, beispielsweise bei unebenem Gelände.

Bei einer Weiterbildung der Erfindung ist zusätzlich zu den an den Enden angeordneten Antriebs- und Führungsrädern noch mindestens ein jeweils zwischen dem Antriebs- und Führungsrad angeordnetes Laufrad vorgesehen.

Ein solches Raupenfahrzeug weist demnach sowohl die aus dem Stand der Technik bekannten Laufrädern zwischen den Antriebs- und Führungsrädern als auch erfindungsgemäße Auflageschienen mit kettenseitigen Rollen auf. Die Kombination aus beiden Techniken kann bei sehr unregelmäßigen Untergründen zweckmäßig sein, beispielsweise bei Geröll, bei denen der Kontaktabschnitt, in dem die Kette und die Auflageschiene in Kontakt miteinander stehen, sehr kurz ist.

Bei einer Weiterbildung der Erfindung ist in dem Kontaktabschnitt des bodenseitigen Kettenabschnitts jeweils kein Laufrad in Kontakt mit der jeweiligen Kette.

Bei dieser Weiterbildung werden die Laufräder im Bereich des Kontaktabschnitts, in dem die jeweilige Auflageschiene vorgesehen ist, demnach vollständig durch die Auflageschienen ersetzt. Dies stellt eine bevorzugte Ausführungsform dar, da bei den üblichen auf Skipisten anzutreffenden Untergrundbedingungen zusätzliche Laufräder im Bereich der Auflageschienen nicht erforderlich sind.

Bei einer Weiterbildung der Erfindung ist zwischen einem Chassis des Raupenfahrzeugs einerseits und der jeweiligen Auflageschiene andererseits mindestens ein Federglied vorgesehen, welches die Auflageschiene gegen den bodenseitigen Kettenabschnitt presst.

Bei einer solchen Weiterbildung stützt sich das Chassis über die Auflageschienen mittels der Federglieder gefedert auf dem Untergrund ab. Als Chassis wird in diesem Zusammenhang ein Abschnitt des Raupenfahrzeugs verstanden, an dem das Antriebsrad und/oder das Führungsrad drehbar gelagert sind. Das Federglied ist demnach so angeordnet, dass es eine federnde Relativbewegung der jeweiligen Auflageschiene relativ zum Antriebsrad und/oder zum Führungsrad ermöglicht. Die Auflageschiene selbst ist dabei nicht chassisfest vorgesehen, sondern im begrenzten Maße gegenüber dem Führungsrad und dem Antriebsrad beweglich. Dadurch kann erreicht werden, dass auch bei welligem Untergrund ein großer Teil des bodenseitigen Kettenabschnitts in Kontakt mit der jeweiligen Auflageschiene bleibt. Darüber hinaus wird der Fahrkomfort verbessert, da die Federung eine ungedämpfte Weitergabe von Unebenheiten im Gelände an die Aufbauten des Raupenfahrzeugs verhindert. Bei bevorzugten Ausführungsformen sind mehrere Federglieder vorgesehen, die über eine Parallelauslenkung der Auflageschiene hinaus auch eine Schwenkbewegung um eine Fahrzeugquerachse gestatten.

Bei einer Weiterbildung der Erfindung ist das Federglied derart ausgebildet, dass es eine translative Beweglichkeit der Auflageschiene relativ zum Chassis ausschließlich in einer durch die Fahrzeughochrichtung und die Fahrzeuglängsrichtung aufgespannten Ebene gestattet. Eine Bewegung der Auflageschiene in Fahrzeugquerrichtung wird durch eine diesbezüglich steife Anbindung der Auflageschiene am Chassis unterbunden. Diese Gestaltung erlaubt es, mittels der Auflageschienen die großen Querkräfte aufzunehmen, die im Falle von Lenkbewegungen des Fahrzeuges auftreten. Bei solchen Lenkbewegungen werden die Ketten in unterschiedlichem Maße bewegt. Dies ist jedoch nur bei einer sicheren Führung der Ketten in Fahrzeugquerrichtung möglich, welche vorzugsweise durch die beschriebene steife Anbindung der Auflageschiene in Fahrzeugquerrichtung erzielt wird. Vorzugsweise ist die Auflageschiene darüber hinaus rotativ um keine Drehachse oder lediglich um die Fahrzeugquerachse verschwenkbar. Die rotative Beweglichkeit um die Fahrzeugquerachse gestattet ein Verschwenken der Auflageschienen zur Anpassung an Bodenwellen und ähnliches. Durch die Verhinderung einer Schwenkbewegung um die Fahrzeuglängsachse und um die Fahrzeughochachse wird ein vorteilhaftes Verhalten des Fahrzeugs bei Lenkbewegungen durch unterschiedliche Kettengeschwindigkeiten erzielt.

Besonders bevorzugt ist es, wenn das Federglied eine Federsteifigkeit von mindestens 250 kN/m aufweist, vorzugsweise von mindestens 500 kN/m aufweist. Diese hohe Federsteifigkeit verhindert, dass die Auflageschienen bei welligem oder anderweitig uneinheitlichem Untergrund stark ausgelenkt werden. Hierdurch wird gewährleistet, dass die Auflageschienen auch in einem solchen Fall die Gewichtskraft des Fahrzeugs in den Boden einleiten können, ohne dass ein unerwünscht hoher Anteil der Gewichtskraft des Fahrzeugs oder die Gesamtgewichtskraft des Fahrzeugs über die Antriebsräder und/oder die Führungsräder in den Boden eingeleitet wird. Die genannten Federsteifigkeiten beziehen sich auf eine parallelverschiebende Auslenkung der Auflageschienen in Fahrzeughochrichtung.

Bei einem Federglied, welches zwei separat vorgesehene Federelemente aufweist, die sich beabstandet voneinander an einer gemeinsamen Auflageschiene und beabstandet voneinander am Chassis abstützen, beträgt die bevorzugte Federsteifigkeit je Feder mindestens 125 kN/m. Dieser Wert bezieht sich dabei auf eine Auslenkung der Auflageschiene in dem Bereich, in dem die entsprechende Feder mit der Auflageschiene verbunden ist. Bei einer Ausgestaltung, bei der das Federglied über ein Pendelglied am Chassis des Fahrzeugs angelenkt ist, beträgt die Federsteifigkeit bezogen auf eine parallel verschiebende Auslenkung der Auflageschiene vorzugsweise mindestens 500 kN/m.

Bei einer Weiterbildung der Erfindung umfasst das Federglied mindestens eine Blattfeder, die an zwei in Fahrzeuglängsrichtung voneinander beabstandeten Lagerstellen mit der Auflageschiene oder der Aufhängung verbunden ist.

Eine solche Blattfeder bzw. ein Paket aus solchen Blattfedern stellt eine preisgünstige und wartungsarme Art der Federung dar. Vorzugsweise ist die Blattfeder oder das Blattfederpaket mit einem mittigen Abschnitt fest oder drehbar an einem Chassis des Raupenfahrzeugs befestigt und an beiden Enden unmittelbar oder mittels Gelenkanordnungen mit der Auflageschiene verbunden.

Bei anderen Weiterbildungen umfasst das Federglied mindestens eine Schraubenfeder, die vorzugsweise als Druckfeder ausgebildet ist oder eine Spiralfeder, die zwischen dem Chassis und einem chassisseitig drehbar gelagerten Federarm vorgesehen ist, wobei der Federarm mit der Auflageschiene schwenkbeweglich verbunden ist. Auch diese Arten der Federung haben sich als zweckmäßig für den hier beschriebenen Zweck herausgestellt. Weitere zweckmäßige Arten von Federgliedern umfassen Drehstabfedern, Luft- oder Gummifedern.

Bei einer bevorzugten Weiterbildung der Erfindung sind an den Ketten Auflageelemente vorgesehen, auf denen die Auflageschienen aufliegen, wobei die Auflageelemente an ihrer Oberseite jeweils eine Auflagefläche aufweisen, die an die Form der Unterseite der Auflageschienen angepasst ist, so dass die Flächenpressung an den Auflageflächen der gleichzeitig mit der Auflageschiene in Kontakt befindlichen Auflageelemente im Mittel kleiner als 2 N/mm² ist, vorzugsweise kleiner als 1,5 N/mm².

Vorzugweise ist je Kettenglied der Kette ein separates Auflageelement vorgesehen. Die Auflageelemente bilden die unmittelbaren Berührungspartner für die Auflageschienen. Die Gewichtskraft des Fahrzeugs wird über Kontaktflächen an den Unterseiten der Auflageschienen und die Auflageflächen an der Oberseite der Auflageelemente des gerade bodenseitigen Kettenabschnitts in den Boden eingeleitet.
Die Auflageelemente sind vorzugsweise metallisch ausgebildet und bilden bei der Reibpaarung mit den Auflageschienen den verschleißärmeren Teil.

Bei einer Weiterbildung der Erfindung ist jeweils zwischen einem Chassis des Raupenfahrzeugs einerseits und der mindestens einen Auflageschiene andererseits ein Pendelglied vorgesehen, welches eine Schwenkbewegung der Auflageschiene um eine Fahrzeugquerachse gestattet.

Durch die Schwenkbewegung der Auflageschiene um eine Fahrzeugquerachse wird erreicht, dass der Bodenkontakt im Kontaktabschnitt der Kette in fast allen Fahrsituationen, insbesondere auch bei welligem Gelände, permanent gewährleistet ist. Als Pendelglied wird im diesem Zusammenhang eine Aufhängung, insbesondere eine Gelenkanordnung, verstanden, die eine Schwenkbewegung der Auflageschiene um eine horizontale Achse gestattet, so dass die Auflageschiene partiell vertikal bewegt wird. Das Pendelglied kann so ausgebildet sein, dass es bei einer Auslenkung eine entgegen der Auslenkung wirkende Kraft auf die Auflageschiene wirkt, die die Auflageschiene in ihre Ausgangslage zurückdrückt.

Bei einer Weiterbildung der Erfindung sind an Kettengliedern der Kette und/oder an den Auflageschienen Führungsmittel vorgesehen, die eine Einleitung von auf die Kette in Fahrzeugquerrichtung wirkenden Kräften in die Auflageschienen ermöglichen.

Solche Querkräfte entstehen insbesondere, wenn das Fahrzeug in einer Hanglage verwendet wird und das Gelände entlang der Fahrzeugquerrichtung abschüssig ist. Weiterhin treten Querkräfte beispielsweise auch durch Lenkbewegungen auf. Damit die Querkräfte nicht ausschließlich von dem Führungsrad und dem Antriebsrad aufgenommen werden müssen, ist es von Vorteil, wenn die Kette so geformt ist, dass sie Querkräfte in die Auflageschienen einleiten kann. Zu diesem Zweck sind die Auflageschienen und die Kettenglieder aneinander angepasst, wobei besonders von Vorteil sein kann, wenn sie in Fahrzeugquerrichtung formschlüssig ineinander greifen.

Besonders vorteilhaft sind dabei Weiterbildungen, bei denen die Führungsmittel eine Führungsprofilierung an den Kettengliedern umfassen, wobei diese Führungsprofilierung zwei in Fahrzeugquerrichtung beabstandete und sich in Fahrzeughochrichtung erstreckende Führungsabschnitte aufweist, in deren Zwischenraum die Auflageschiene eingreift.

Je nach Wirkrichtung der Querkräfte ist jeweils einer der Führungsabschnitte in Kontakt mit der Auflageschiene. Die Auflageschiene ist dabei derart am Chassis angelenkt, dass sie die Kräfte in Fahrzeugquerrichtung auf das Chassis des Raupenfahrzeugs übertragen kann.

Bei einer anderen Weiterbildung der Erfindung umfassen die Führungsmittel eine Führungsprofilierung an den Kettengliedern, wobei diese Führungsprofilierungen einen sich in Fahrzeughochrichtung erstreckenden Führungsabschnitt aufweist, der in eine sich in Fahrzeuglängsrichtung erstreckende Nut an einer Unterseite der Auflageschiene eingreift.

Die Auflageschiene ist zu diesem Zweck in Längsrichtung zweigeteilt, wobei sich zwischen den beiden Teilen eine Nut erstreckt. Unter Nut ist im Zusammenhang mit dieser Weiterbildung eine durchgehende Ausnehmung zu verstehen, wobei nicht von Belang ist, ob die beiden Teile der Auflageschiene einstückig ausgebildet sind oder anderweitig miteinander verbunden sind.

Bei einer Weiterbildung der Erfindung sind die Auflageschienen jeweils an einem Traggestell befestigt, wobei das Traggestell jeweils zur Befestigung an mindestens einer sich in Fahrzeugquerrichtung erstreckenden Achse des Raupenfahrzeugs ausgebildet ist.

Als Achsen im Sinne dieser Weiterbildung werden chassisseitig vorgesehene Aufhängungspunkte angesehen, die für die drehbare Befestigung von Laufrädern verwendbar sind. Diese Weiterbildung ermöglicht es, aus herkömmlichen Raupenfahrzeugen mit nur geringem Kostenaufwand erfindungsgemäße Raupenfahrzeuge zu machen. Je nach Typ des Raupenfahrzeugs sind dabei zwischen zwei und vier oder mehr Achsen je Seite vorhanden. Diese Achsen können verwendet werden, um die Traggestelle zu befestigen. Neben der dauerhaften Umrüstung von Raupenfahrzeugen ist dadurch auch eine fallweise Umrüstung möglich, so dass in Abhängigkeit des Untergrundes zwischen Laufrädern und Auflageschienen gewählt werden kann.

Bei einer Weiterbildung der Erfindung sind die Auflageschienen jeweils an mindestens einem Ende in Fahrzeughochrichtung nach oben gebogen.

Diese Ausgestaltung der Auflageschienen ist vorteilhaft, da es nicht zu einem Verkanten der Enden der Auflageschienen mit der an den Auflageschienen entlanglaufenden Kette kommen kann. Vorzugsweise sind die Auflageschienen sowohl am vorderen als auch am hinteren Ende nach oben gebogen.

Bei einer Weiterbildung der Erfindung sind an jeder Kette mindestens zwei Auflageschienen vorgesehen, die jeweils in einem Kontaktabschnitt zur permanenten Anlage am bodenseitigen Kettenabschnitt ausgebildet sind, wobei die Kontaktabschnitte sich in Fahrzeuglängsrichtung überlappen.

Die beiden Auflageschienen sind demnach an der gleichen Kette vorgesehen. Sie sind dabei jedoch in Fahrzeugquerrichtung voneinander beabstandet, so dass sie in einem Überlappungsabschnitt zeitgleich mit demselben Kettenglied in Kontakt stehen können. Eine solche Ausgestaltung erlaubt es, den bodenseitigen Abschnitt der Ketten annähernd vollständig mit der Gewichtskraft des Raupenfahrzeugs zu belasten, so dass eine nahezu optimale Verteilung der Gewichtskraft auf die Ketten erreicht wird.

Bei einer Weiterbildung der Erfindung bestehen die Auflageschienen zumindest im Bereich einer unteren Kontaktfläche, die zum Kontakt mit dem bodenseitigen Kettenabschnitt ausgebildet ist, aus einem Kunststoff. Weiterhin besteht die Auflageschiene vorzugsweise im Bereich seitlicher Kontaktflächen, die zum Kontakt mit den kettenseitigen sich in Fahrzeughochrichtung erstreckenden Führungsabschnitten vorgesehen sind, aus einem Kunststoff. Es können dabei separate Kunststoffabschnitte an der unteren Kontaktfläche der Auflageschiene einerseits und an den seitlichen Kontaktflächen der Auflageschiene andererseits vorgesehen sein. Es können auch sich einstückig von den seitlichen Kontaktflächen zur unteren Kontaktfläche erstreckende Kunststoffelemente vorgesehen sein. Die Auflageschiene kann im einfachsten Fall vollständig oder im Wesentlichen aus Kunststoff gefertigt sein. Bevorzugt ist es jedoch, wenn an der unteren und/oder den seitlichen Kontaktflächen eine Kunststoffschicht von weniger als 12 mm Stärke vorgesehen ist. Diese Kunststoffschicht bedeckt dabei abschnittsweise einen Grundkörper der Auflageschiene, der vorzugsweise metallisch ist.

Als Kunststoffe kommen beispielsweise Polyurethan und Polyethylen, insbesondere Polyethylen PE 1000 in Frage. Als besonders vorteilhaft wird die Verwendung von Polyamid angesehen, insbesondere von PA6 oder PA12.

Eine besondere Ausgestaltung sieht vor, dass die untere und/oder die seitlichen Kontaktflächen aus einer Mehrzahl diskreter Kontaktflächenabschnitte ausgebildet ist. Diese Kontaktflächenabschnitte werden vorzugsweise getrennt hergestellt und anschließend entweder im miteinander verbundenen oder im unverbundenen Zustand an der Auflageschiene angebracht. So ist es beispielsweise möglich, die untere Kontaktfläche aus einzelnen Segmenten zusammenzusetzen, die bei einer besonders bevorzugten Ausgestaltung aus verschiedenen Materialien bestehen. So kann spezifisch auf die unterschiedlichen Belastungsprofilen in verschiedenen Bereichen der Auflageschiene eingegangen werden.

Bei einer bevorzugten Ausgestaltung der Erfindung ist jeder Kette eine in Führungslängsrichtung ausgerichtete Stützschiene zur Führung eines bodenabgewandten Abschnitts der jeweiligen Kette zugeordnet. Diese Stützschiene verhindert, dass die Kette durchhängt, wenn sie auf der bodenabgewandten Seite bei der Vorwärtsfahrt in Fahrzeugfahrtrichtung nach vorne befördert wird oder bei der Rückwärtsfahrt entgegen der Fahrzeugfahrtrichtung nach hinten befördert wird. Die Stützschiene erstreckt sich vorzugsweise in etwa über die Länge der der Kette zugeordneten Auflageabschnitte. Sie nimmt vorzugsweise einen Bereich von mindestens 60% der Distanz zwischen dem Antriebsrad und dem Führungsrad der jeweiligen Kette ein.

Zur Reduzierung der Reibung besteht die Stützschiene zumindest im Bereich einer oberen Kontaktfläche, die zum Kontakt mit dem Boden abgewandten Abschnitt der jeweiligen Kette ausgebildet ist, aus einem Kunststoff. Die hierfür bevorzugten Kunststoffe sind mit den bevorzugten Kunststoffen für die Auflageschienen identisch.

### Kurzbeschreibung der Zeichnungen

Weitere Vorteile und Merkmale der Erfindung ergeben sich aus den Ansprüchen sowie der nachfolgenden Beschreibung von bevorzugten Ausführungsbeispielen, die anhand der Zeichnungen dargestellt sind. Dabei zeigen:
- Fig. 1: ein Raupenfahrzeug gemäß dem Stand der Technik ohne Auflageschienen,
- Fig. 2: eine nicht von der Erfindung umfasste erste Ausfüh- rungsform eines erfindungsgemäßen Raupenfahr- zeugs mit ungefedert gelagerten Auflageschienen,
- Fig. 3, 3a und 3b: eine nicht von der Erfindung umfasste zweite Ausfüh- rungsform eines erfindungsgemäßen Raupenfahr- zeugs mit blattfedergefederten Auflageschienen sowie Detailansichten der Auflageschiene bei kraftbeauf- schlagter und verschwenkter Blattfeder,
- Fig. 4: eine nicht von der Erfindung umfasste dritte Ausfüh- rungsform eines erfindungsgemäßen Raupenfahr- zeugs mit blattfedergefederter Auflageschiene und zwei Laufrollen je Kette,
- Fig. 5 und 5a: eine nicht von der Erfindung umfasste vierte Ausfüh- rungsform eines erfindungsgemäßen Raupenfahr- zeugs mit einer Federung, die durch spiralfedergefe- derte oder drehstabfedergefederte Schwenkarme ge- bildet wird,
- Fig. 6 und 6a: eine nicht von der Erfindung umfasste fünfte Ausfüh- rungsform eines erfindungsgemäßen Raupenfahr- zeugs mit schraubenfedergefederten Trägern, an de- nen Auflageschienen schwenkbar gelagert sind, sowie eine Detailansicht der Auflageschiene in einem ver- schwenkten Zustand,
- Fig. 7 und 7a: eine nicht von der Erfindung umfasste sechste Aus- führungsform eines erfindungsgemäßen Raupenfahr- zeugs mit schwenkbar gelagerten Trägern, an denen die Auflageschienen schraubenfedergefedert befestig sind, sowie eine Detailansicht der Auflageschiene in einem verschwenkten Zustand,
- Fig. 8: eine nicht von der Erfindung umfasste siebente Aus- führungsform eines erfindungsgemäßen Raupenfahr- zeugs mit drei Auflageschienen je Kette,
- Fig. 9a und 9b: die Kette und die Auflageschienen der Ausführungs- form der Fig. 7 in einer geschnittenen Ansicht,
- Fig. 10a und 10b: eine Variante einer Auflagelageschiene eines erfin- dungsgemäßen Raupenfahrzeugs,
- Fig. 11a und 11b: eine weitere Variante einer Auflagelageschiene eines erfindungsgemäßen Raupenfahrzeugs,
- Fig. 12: eine nicht von der Erfindung umfasste Ausführungs- form eines Auflage- und Führungselements zur Ver- wendung an einer Kette eines erfindungsgemäßen Raupenfahrzeugs und

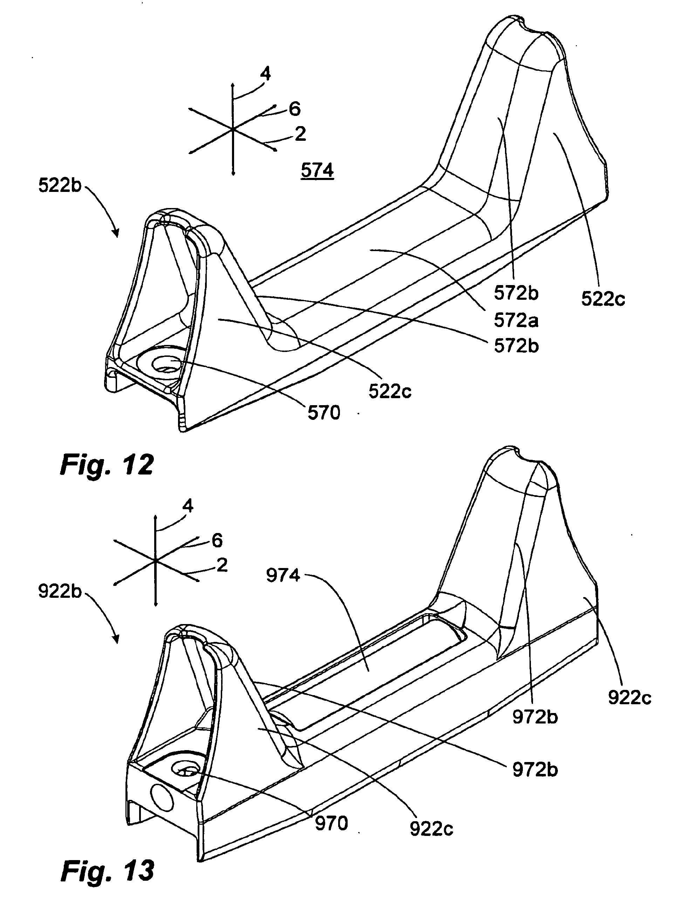

- Fig. 12 bis 14: Ausführungsformen von Auflage- und Führungsele- menten zur Verwendung an einer Kette eines erfin- dungsgemäßen Raupenfahrzeugs.

### Detaillierte Beschreibung der Ausführungsbeispiele

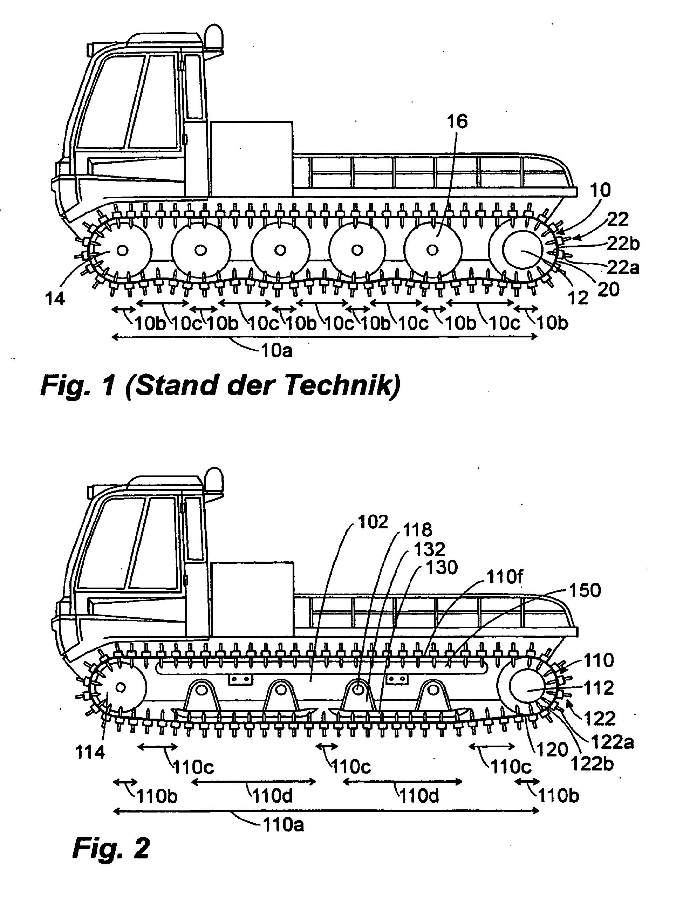

Fig. 1 zeigt ein Raupenfahrzeug gemäß dem Stand der Technik. Ein solches Raupenfahrzeug weist zwei Ketten 10 auf, die in Fahrzeugquerrichtung zueinander beabstandet sind. Bei der Seitendarstellung der Fig. 1 wie auch bei den nachfolgenden Zeichnungen von Ausführungsbeispielen ist jeweils nur eine Kette dargestellt. Der Aufbau ist jedoch bei beiden Ketten eines Raupenfahrzeugs jeweils identisch.

Die Kette 10 des Raupenfahrzeugs der Fig. 1 ist am hinteren Ende des Fahrzeugs um ein Antriebsrad 12 und am vorderen Ende des Fahrzeugs um ein Führungsrad 14 gelegt. Zwischen dem Antriebsrad 12 und dem Führungsrad 14 sind Laufräder 16 vorgesehen. Die Kette 10 selbst besteht aus einem Kettenband 20, an dem Kettenglieder 22 befestigt sind. Diese Kettenglieder 22 weisen jeweils einen sich nach außen erstreckenden Kettensteg 22a sowie ein sich nach innen erstreckendes Führungselement 22b auf. Das Führungselement 22b der Kettenglieder bilden den Teil der Kette, der im unmittelbaren Kontakt mit den Laufrädern 16 und dem Führungsrad 14 steht.

Die Gewichtskraft des Raupenfahrzeugs wird über die Kette 10 in den Untergrund geführt. Dabei wird ein bodenseitiger Abschnitt 10a der Kette 10 jedoch nicht gleichmäßig belastet. Stattdessen erfolgt die Krafteinleitung in Kontaktabschnitten 10b vor allem im Bereich der Räder 16, so dass diese Kontaktabschnitte 10b den Hauptteil der Gewichtskraft des Raupenfahrzeugs tragen. In Folge dessen sind die Kettenglieder 22 und insbesondere die Führungselemente 22b sowie die Kettenstege 22a in den Kontaktabschnitten 10b besonders belastet. In den dazwischenliegenden Kettenabschnitten 10c erfolgt nur eine geringe Krafteinleitung der Gewichtskraft des Raupenfahrzeugs durch die Verbindung der Kettenglieder in diesen Kettenabschnitten 10c zu den Kontaktabschnitten 10b der Kette 10.

Die Kettenstege 22a, die das Ziel verfolgen, in den Untergrund hineingedrückt zu werden, um so den Schlupf zwischen Kette und Untergrund zu vermindern, werden nur in den Kettenabschnitten 10b vollständig oder nahezu vollständig in den Untergrund eingedrückt. In den dazwischenliegenden Abschnitten 10c erfolgt nur eine geringe Eindrückung der Kettenstege 22a der Kettenglieder 22 in den Untergrund, da die dafür erforderliche von oben wirkende Gewichtskraft des Raupenfahrzeugs fehlt. Die Reduzierung des Schlupfes durch die Kettenstege 22a kann also nur durch einige wenige Kettenstege 22a in den Kontaktabschnitten 10b bewerkstellig werden. Darüber hinaus kommt es im Fahrbetrieb zu Schwingungen im Bereich der dazwischenliegenden Kettenabschnitte 10c, die ein unruhiges Fahrverhalten und eine verstärkte Verletzung des Untergrundes zur Folge haben. Der dargestellte Aufbau gemäß dem Stand der Technik führt zudem zu hohem Verschleiß an den Kettenstegen 22a, da diese - wenn sie sich in den Kontaktabschnitten befinden - einen hohen Anteil der Gewichtskraft des Raupenfahrzeugs tragen müssen.

Die Fig. 2 bis 9 und 12 zeigen Ausführungsformen, die in der dargestellten Form von der Erfindung nicht umfasst sind, die als Grundlage der anschließend erläuterten Erfindung dienen.

Fig. 2 zeigt eine erste Ausführungsform eines Raupenfahrzeugs. Bei diesem Raupenfahrzeug findet entsprechend dem Stand der Technik der Fig. 1 ein Kettenantrieb Anwendung, der zwei Ketten 110 aufweist, die jeweils an einem vorderen Fahrzeugende um Führungsräder 114 und an einem hinteren Fahrzeugende um Antriebsräder 112 gelegt sind. Statt der Laufräder 16 weist das in Fig. 2 dargestellte Raupenfahrzeug Auflageschienen 130 auf, die über Träger 132 jeweils an zwei achsartig ausgebildeten Aufhängungspunkten 118 befestigt sind, die wiederum fest mit einem Chassis 102 des Raupenfahrzeugs verbunden sind. Die Auflageschienen sind demnach starr am Chassis 102 des Raupenfahrzeugs befestigt. Wie der Fig. 2 zu entnehmen ist, haben die Auflageschienen 130 erhebliche Auswirkungen auf das Verhalten der Kette 110 an deren bodenseitigem Abschnitt 110a. Die Kette 110 liegt in Kontaktabschnitten 110b am Führungsrad 114 und am Antriebsrad 112 und in Kontaktabschnitten 110d an den Auflageschienen 130 an. Lediglich in kleinen dazwischenliegenden Abschnitten 110c liegt die Kette 110 weder an einem Rad 112, 114 noch an einer Auflageschiene 130 an. Diese Abschnitte 110c der Kette 110 sind jedoch ausreichend kurz, um nicht negativ ins Gewicht zu fallen.

Die Gewichtskraft des Fahrzeugs wird nahezu vollständig, also zu mehr als 90%, über die Auflageschienen 130 in die Kette 110 und von dort in den Untergrund eingeleitet. Das Führungsrad 114 und das Antriebsrad 112 übernehmen lediglich bei welligem Gelände kurzzeitig eine gewichtstragende Funktion.

Der dem Boden abgewandte Abschnitt 110f der Kette 110 wird mittels einer Stützschiene 150 gestützt, so dass er nicht in störendem Maße durchhängt.

Durch die Kontaktabschnitte 110d, in denen die Kette ideal belastet ist, wird ein hohes Maß an Haftung mit dem Untergrund erreicht. Die Kettenstege 122a der Kettenglieder 122 in den Kontaktabschnitten 110d dringen vollständig oder nahezu vollständig in den Untergrund ein und ermöglichen so einen fast schlupffreien Fahrbetrieb. Dadurch, dass die Abschnitte 110c, in denen die Kette quer zu ihrer Erstreckung nicht von oben mit einer Kraft beaufschlagt wird, sehr kurz sind, kommt es nicht zu störenden Aufschwingungen dieser Kettenabschnitte 110c.

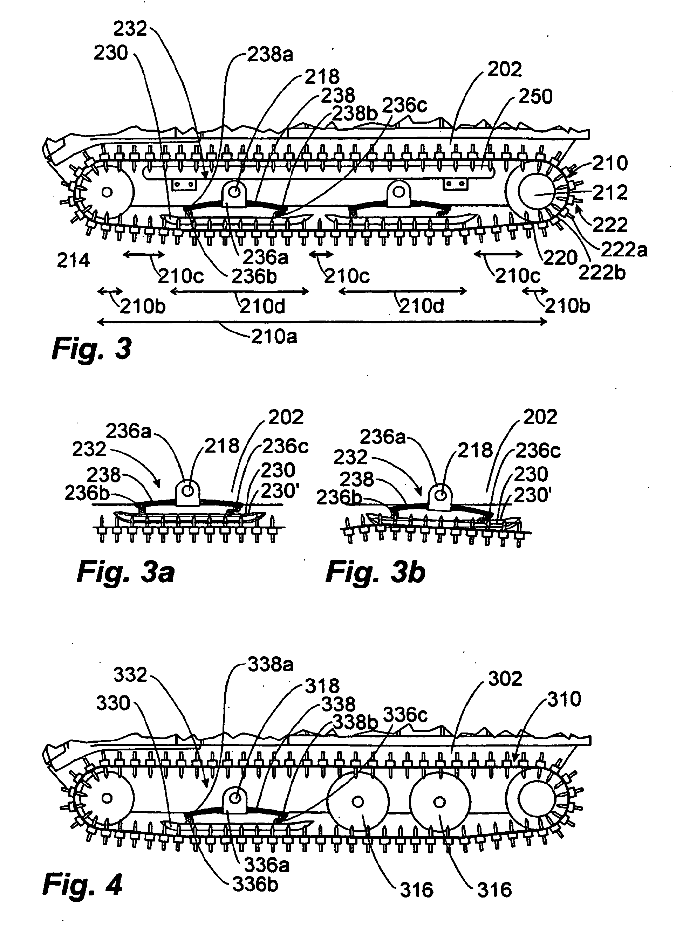

Die Fig. 3, 4, 5, 6, 7, 8, zeigen weitere Ausführungsformen von Raupenfahrzeugen. Die Raupenfahrzeuge sind jedoch jeweils nur teilweise dargestellt, da der Aufbau der Raupenfahrzeuge für die vorliegende Erfindung nicht erheblich ist. Bestandteile dieser weiteren Ausführungsformen, die hinsichtlich des Aufbaus und der Funktion den Bestandteilen der Ausführungsform der Figur 2 entsprechen, sind durch Bezugszeichen gekennzeichnet, die hinsichtlich der letzten beiden Ziffern mit den Bezugszeichen der entsprechenden Bestandteile der Ausführungsform der Figur 2 übereinstimmen.

Bei der Ausführungsform der Fig. 3 finden sich ebenfalls eine Kette 210 sowie ein Antriebsrad 212 und ein Führungsrad 214. Ein bodenseitiger Abschnitt 210a der Kette 210 ist in zwei Kontaktabschnitten 210d durch Auflageschienen 230 geführt, wobei diese jeweils mittels eines Traggestells 232 am Chassis 202 des Raupenfahrzeugs befestigt sind. Die Traggestelle 232 weisen jeweils ein Blattfederpaket 238 auf, welches mit einer mittig angeordneten Federpakethalterung 236a verbunden ist, die um eine chassisfeste Achse 218 schwenkbar gelagert ist. Auf der Seite der Auflageschiene 230 ist das Blattfederpaket an einem ersten Ende 238a über ein einfaches Gelenk 236b mit der Auflageschiene 230 verbunden. Auf der gegenüberliegenden Seite 238b ist das Blattfederpaket 238 über ein Doppelgelenk 236c mit Ausgleichsschwenkarm mit der Auflageschiene 230 verbunden, wobei der Ausgleichsschwenkarm eine Längenänderung des Blattfederpakets 238 in Fahrzeuglängsrichtung ermöglicht.

Wie den Fig. 3a und 3b zu entnehmen ist, gestattet die Aufhängung der Auflageschiene 230 an einer schwenkbar gelagerten Federpakethalterung 236a mit Blattfederpaket 238 sowohl eine Parallelverschiebung der Auflageschiene 230 als auch ein Verkippen der Auflageschiene 230 gegenüber ihrer Ausgangslage 230'.

Die Fig. 4 zeigt eine dritte Ausführungsform eines Raupenfahrzeugs. Bei diesem finden Auflageschienen 330 Anwendung, die in gleicher Art und Weise wie die Auflageschienen 230 der Ausführungsform der Fig. 3 mittels eines Traggestells mit einem Blattfederpaket 338 beweglich am Chassis 302 des Raupenfahrzeugs angelenkt sind. Abweichend von der Ausführungsform der Fig. 3 ist jedoch nur eine Auflageschiene je Kette vorgesehen. Im Übrigen finden an jeder Kette jeweils zwei aus dem Stand der Technik bekannte Laufräder Anwendung. Eine solche kombinierte Ausführungsform ist bei besonders unregelmäßigem Untergrund oder beispielsweise bei Geröll von Vorteil, da die Vorteile von Auflageschienen bei solchem Untergrund weniger ausgeprägt sind.

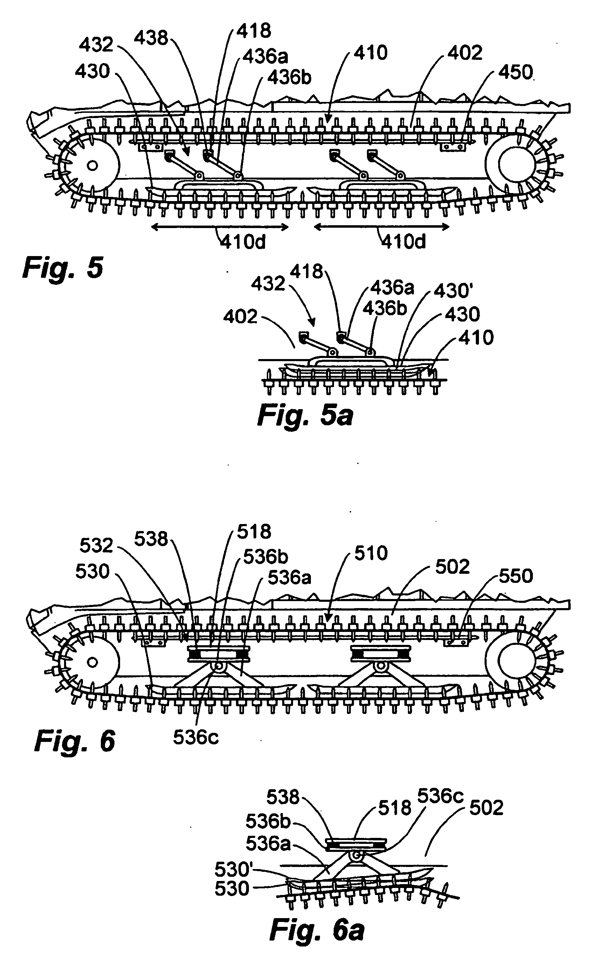

Bei der Ausführungsform eines Raupenfahrzeugs gemäß Fig. 5 sind wie bei der Ausführungsform der Fig. 3 zwei Auflageschienen 430 vorgesehen, die jeweils mittels eines Traggestells 432 mit dem Chassis 402 des Raupenfahrzeugs verbunden sind. Die Traggestelle weisen jeweils zwei Schwenkarme 436a auf, die am Chassis schwenkbeweglich gelagert sind. Über Drehstabfedern 438 oder Spiralfedern 438, die einerseits mit den Schwenkarmen 436a und andererseits mit chassisfesten Trägern 418 verbunden sind, werden die Auflageschienen 430, die über Gelenke 436b mit den Schwenkarmen 436a verbunden sind, gegen einen bodenseitige Kontaktabschnitt 410d der Kette 410 gedrückt.

Wie die Fig. 5a zeigt, können die Auflageschienen 430 aus ihrer Ausgangslage 430' mittels der Gelenkstangen 436a gegen die Federkraft der Spiralfedern 438 bzw. Drehstabfedern 438 parallel ausgelenkt werden und sich so an welligen Untergrund anpassen.

Bei einer alternativen, nicht dargestellten Ausführungsform ist je Auflageschiene nur ein Schwenkarm vorgesehen. Bei einer solchen Ausführungsform ist auch eine Schwenkbewegung der Auflageschienen um eine Fahrzeugquerachse möglich.

Fig. 6 zeigt eine fünfte Ausführungsform eines Raupenfahrzeugs. Bei diesem sind wiederum je Kette 510 zwei Auflageschienen 530 vorgesehen, die jeweils über ein Traggestell 532 mit dem Chassis 502 des Raupenfahrzeugs verbunden sind. Das Traggestell umfasst mit den Auflageschienen 530 fest verbundene Befestigungsabschnitte 536a, die sich in Fahrzeughochrichtung von den Auflageschienen 530 nach oben erstrecken. Die Befestigungsabschnitte sind über Gelenke 536c mit unteren Federplatten 536b schwenkbar verbunden. Die unteren Federplatten 536b stehen über zwei mit Schraubenfedern ausgebildete Federelemente 538 in Wirkverbindung mit oberen Federplatten 518, die am Chassis 502 des Raupenfahrzeugs befestigt, beispielsweise angeschweißt sind. Wie auch die Ausführungsform der Fig. 3, gestattet diese Gestaltung der Auflageschienen 530 sowie der Lagerung der Auflageschienen gegenüber einer Ausgangslage 530' sowohl eine Schwenkbewegung um eine Fahrzeugquerachse als auch eine Parallelauslenkung der Auflageschienen 530 in ihrer Gesamtheit. Beides ist in der Fig. 6a bildlich dargestellt.

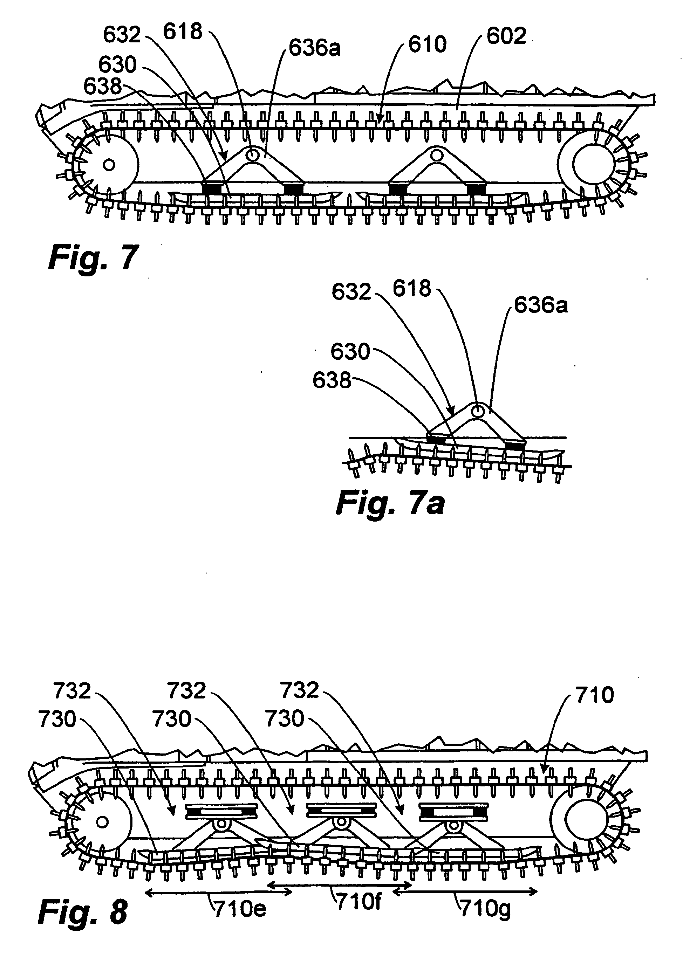

In der Fig. 7 ist eine weitere Ausführungsform eines Raupenfahrzeugs dargestellt, wobei wiederum zwei Auflageschienen 630 zur Führung einer Kette 610 vorgesehen sind. Die Lagerung dieser Auflageschienen 630 am Chassis 602 entspricht etwa der Ausführungsform der Fig. 6. Wiederum finden Traggestelle 632 Anwendung, die Federelemente 638 mit Schraubenfedern aufweisen und Schwenkbeweglichkeit der Auflageschienen 630 gegenüber dem Chassis 602 gewährleisten. Abweichend von der Ausführungsform der Fig. 6 sind die Schraubenfedern 638 jedoch zwischen den Auflageschienen 630 und einem jeweils zugeordneten Träger 636a vorgesehen, so dass sie bei einer Schwenkbewegung des Trägers 636a gegenüber dem Chassis 602 mit verschwenkt werden.

Die Beweglichkeit dieser Anordnung kann der Fig. 7a entnommen werden.

Die Fig. 8 zeigt Ausführungsform eines Raupenfahrzeugs, die eine Variationen des Raupenfahrzeugs der Fig. 6 darstellen.

Bei dem Raupenfahrzeug der Fig. 8 sind die Auflageschienen 730 und die Traggestelle 732 identisch mit den entsprechenden Komponenten der Ausführungsform der Fig. 6. Abweichend von dieser sind jedoch je Kette drei Auflageschienen 730 vorgesehen, deren Kontaktbereich 710e, 710f, 710g sich in Fahrzeuglängsrichtung zum Teil überlappen. Hierdurch wird ein durchgehender Kontaktbereich an der Kette 710 ermöglicht. Wie der Fig. 8 zu entnehmen ist, ist durch die Ausgestaltung der Traggestelle 732 auch bei welligem Grund eine fast vollständige Anlage der Auflageschienen 730 an der Kette 710 möglich.

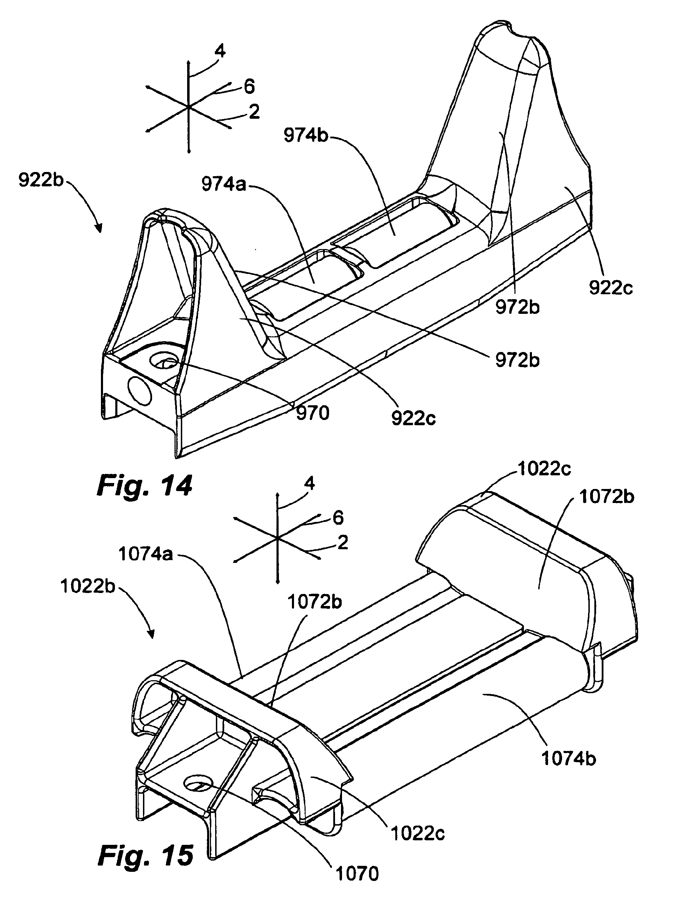

Die erfindungsgemäße Ausgestaltung sieht vor, dass Rollen an Auflageelementen vorgesehen sind, die fest mit der Kette verbunden sind. Entsprechende Ausgestaltungen sind nachfolgend noch zu den Figuren 14 bis 16 beschrieben.

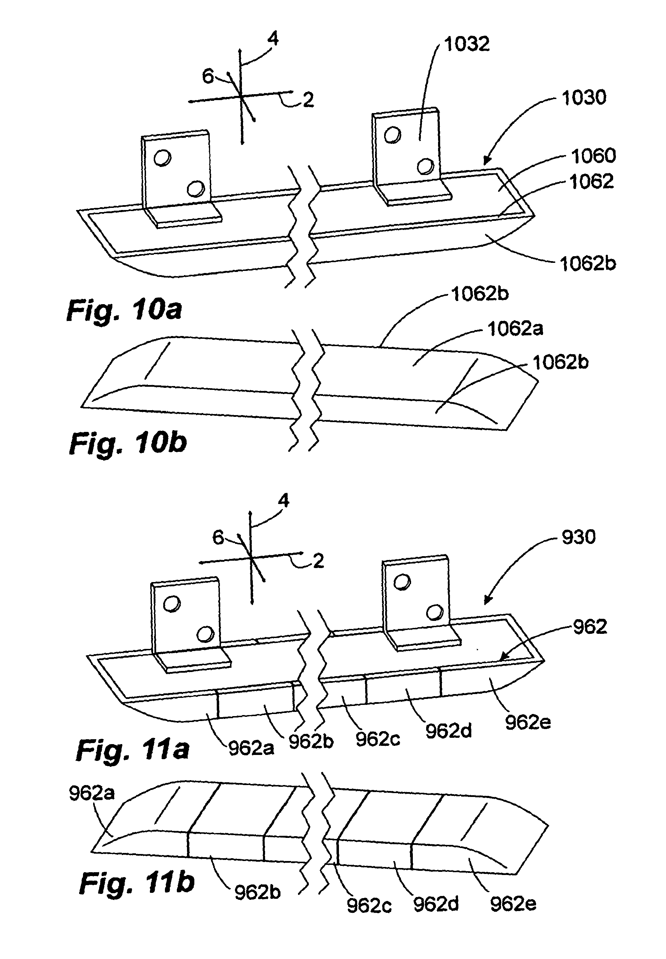

Für alle dargestellten Ausführungsformen gilt, dass die Auflageschienen die Gewichtskraft des Fahrzeugs vollständig oder nahezu vollständig über die Ketten in den Untergrund einleiten. Weiterhin gilt für alle Ausführungsbeispiele, dass die Auflageschienen nur in einer durch die Fahrzeughoch- und die Fahrzeugslängsrichtung aufgespannten Ebene translativ und/oder rotativ beweglich sind. In Fahrzeugquerrichtung sind die Auflageschienen jeweils in einer relativ zum Chassis starren Position festgelegt. Hierdurch ist es den Auflageschienen möglich, die insbesondere im Zuge von Lenkbewegungen auftretenden Querkräfte an den Ketten aufzunehmen. Details zu den Auflageschienen und den kettenseitigen Auflageelementen werden im Zusammenhang mit den Figuren 11 bis 16 beschrieben.

Nachfolgend sind Ausführungsalternativen zur Gestaltung der Auflageschienen und zur Gestaltung kettenseitiger Auflage- und Führungselemente vorgesehen sein. Diese Gestaltungen sind mit allen vorstehenden Fahrzeuggestaltungen realisierbar.

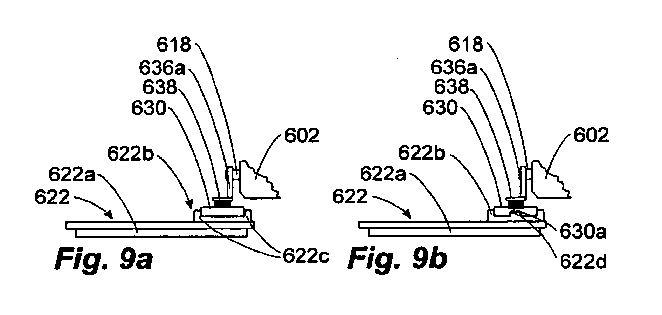

Die Fig. 9a und 9b zeigen das Ineinandergreifen der Auflageschienen 630 und der Ketten 610. Zu erkennen ist, dass an den Kettengliedern 622 Auflage- und Führungselemente 622b vorgesehen sind, die eine in Fahrzeugquerrichtung profilierte Form aufweisen. Im Falle des Ausführungsbeispiels der Fig. 9a ist diese Form in etwa U-förmig und weist als Schenkel der U-Form zwei Führungsabschnitte 622c auf. Die Auflageschiene 630 weist eine Breite auf, die diese U-förmige Profilierung des Auflage- und Führungselements 622b zwischen den Führungsabschnitten 622c weitgehend ausfüllt. Wenn auf das Chassis 602 oder die Kette 610 Kräfte in Fahrzeugquerrichtung wirken, wird durch die Profilierung verhindert, dass die Führungsschienen 630 einerseits und die Ketten 610 bzw. die Auflage- und Führungselemente 622b der Ketten 610 andererseits aus dem gemeinsamen Eingriff geraten. Stattdessen können die Kräfte vom Chassis 602 auf die Ketten 610 sowie in umgekehrter Richtung übertragen werden.

Bei der Ausführungsform der Fig. 9b ist zusätzlich zu der seitlichen Begrenzung, die das U-förmige Auflage- und Führungselement 622b mit den Führungsabschnitten 622c bietet, noch ein mittiger Führungsabschnitt 622d vorgesehen, der in eine korrespondierende Nut 630a der Auflageschiene 630 eingreift. Der Halt wird durch diesen zusätzlichen Führungsabschnitt 622d und die Nut 630a zusätzlich verbessert.

Die Figuren 10a, 10b zeigen eine Ausführungsform einer Auflageschiene zur Verwendung mit einem erfindungsgemäßen Raupenfahrzeug. Die Auflageschiene 1030 kann über Tragwinkel 1032 mit dem Chassis eines erfindungsgemäßen Raupenfahrzeugs fest verbunden werden. Vorzugsweise wird die dargestellte Auflageschiene jedoch mittels der Tragwinkel 1032 an einem Traggestell festgelegt, welches eine federbelastete Beweglichkeit der Auflageschiene in einer durch die Fahrzeughochrichtung 2 und die Fahrzeuglängsrichtung 4 aufgespannten Ebene gestattet. Die Auflageschiene 1030 selbst besteht aus einem metallischen Schienenkern 1060 und einer darauf aufgebrachten und in etwa 10 mm starken Kontaktschicht 1062. Die Kontaktschicht 1062 besteht aus dem Kunststoff Polyamid PA6 und ist als verschleißende Schicht vorgesehen. Die Hauptbelastung wird dabei an einer unteren Kontaktfläche 1062a verursacht. Diese untere Kontaktfläche 1062a stellt eine Gleitfläche dar, die im Betrieb über den bodenseitigen Kettenabschnitt oder über mit dem bodenseitigen Kettenabschnitt verbundene Auflageelemente hinweggleitet. Ebenfalls in starkem Maße belastet sind im Betrieb die seitlichen Kontaktflächen 1062b. Diese kommen in Betrieb mit an der Kette vorgesehenen seitlichen Führungsabschnitten in Reibkontakt, wobei sie insbesondere die Führung der Kette in Fahrzeugquerrichtung gewährleisten. Da erfindungsgemäße Kettenfahrzeuge unter Bewirkung hoher Querkräfte dadurch gesteuert werden, dass die beiden Ketten mit unterschiedlicher Geschwindigkeit angetrieben werden, kommt es im Bereich der seitlichen Kontaktflächen 1062b dabei zu hohen Flächenpressungen. Die Verwendung von Polyamid-Kunststoff im Bereich dieser Flächen sorgt für eine dennoch hohe Betriebssicherheit und Verschleißfestigkeit.

Bei der Ausführungsform der Figuren 11a, 11b entspricht der Aufbau der dargestellten Führungsschiene 930 im Wesentlichen dem Aufbau der in den Figuren 10a und 10b dargestellten Führungsschiene 1030. Abweichend von der Ausführungsform der Figuren 10a und 10b wird die Kunststoffschicht 962 bei dieser zweiten Ausführungsform jedoch durch separate Segmente 962a, 962b, 962c, 962d, 962e gebildet. Die Verwendung solcher Segmente hat mehrere Vorteile. Zum einen ist es fertigungstechnisch einfacher, Kunststoffteile geringer Baugröße zu fertigen. Dies gilt insbesondere für Polyamid-Teile. Weiterhin erlaubt ein derartiger Aufbau den Austausch einzelner Segmente 962a, 962b, 962c, 962d, 962e im Verschleißfalle. Ein dritter Vorteil liegt darin, dass es hierdurch möglich wird, die Auflageschiene in verschieden belasteten Bereichen mit bezüglich ihrer Form und insbesondere ihres Materials verschiedenartig gestalteten Segmenten zu versehen. So kann beispielsweise das vorderste Segment 962a aus einem besonders festen Kunststoff hergestellt sein, während die nachfolgenden Segmente 962b, 962c, 962d, 962e aus einem Kunststoff bestehen können, der im Hinblick auf eine geringe Haft- und/oder Gleitreibung mit den kettenseitigen Auflageelementen ausgewählt wurde.

Figur 12 zeigt ein nicht von der Erfindung umfasstes Auflage- und Führungselement 522b, welches nur zu Erläuterungszwecken in diesem Dokument enthalten ist. Dieses Auflage- und Führungselement kann über Bohrungen 570 an ein Kettenglied starr befestigt werden. Vorzugsweise ist jedes Kettenglied der Ketten mit einem derartigen Auflage- und Führungselement 522b versehen. Das Auflage- und Führungselement 522b weist eine in etwa U-förmige Formgebung auf, an deren Grund eine plane Auflagefläche 572a vorgesehen ist. Zwei sich in Fahrzeughochrichtung 4 nach oben erstreckende Führungsabschnitte 522c verfügen auf ihren aufeinander zu weisenden Seiten jeweils über eine Seitenführungsfläche 572b. In dem freien Bereich 574, der seitlich über die Seitenführungsflächen 572b und unten über die Auflagefläche 572a begrenzt ist, ist die Auflageschiene angeordnet, wenn das entsprechende Kettenglied, dem das Auflage- und Führungselement 522b zugeordnet ist, zum bodenseitigen Bodenabschnitt der Kette gehört.

Von besonderer Relevanz ist die Ausgestaltung der Auflagefläche 572a. Durch die Anpassung an die ebenfalls plane Unterseite einer Auflageschiene ist der Bereich, in dem die Auflageschiene und die Auflagefläche 572a in unmittelbarem Kontakt sind, vergleichsweise groß. Vorzugsweise ist sie derart bemessen, dass die Gesamtheit aller Auflage- und Führungselemente 522b, die gleichzeitig die Gewichtskraft des Fahrzeugs aufnehmen, ausreichend groß ist, um die Flächenpressung im Bereich der Auflageflächen 572a auf unter 2 N/ mm² im Mittel zu begrenzen. Hierdurch kann die gewünschte Verschleißarmut erzielt werden. Die dargestellte plane Auflagefläche 572a weist eine Gesamtgröße von etwa als 2900mm² auf.

Die Figur 13 zeigt eine erfindungsgemäße Ausgestaltung eines Auflage- und Führungsabschnitts 922b. Der Grundaufbau stimmt mit der Ausführungsform der Figur 12 überein. Mit bezüglich der beiden hinteren Ziffern übereinstimmenden Bezugszeichen sind jeweils gleichartige Bauteile und Elemente gekennzeichnet.

Abweichend von der Figur 12 ist jedoch an der Oberseite eine um die Fahrzeugquerachse 6 drehbare Rolle 974 vorgesehen, die mittels nicht dargestellter Gleitlager gelagert ist. Bei einer Ausgestaltung eines erfindungsgemäßen Raupenfahrzeugs mit Ketten, an denen derartige Auflage- und Führungselemente 922b vorgesehen sind, besteht aufgrund solcher Rollen 974 kaum Gleitreibung zwischen den Auflageschienen und den Auflage- und Führungselementen 922b. Stattdessen rollen die Auflageschienen über die Auflage- und Führungselemente 922b hinüber. Gleitreibung besteht dabei nur im Bereich der Seitenführungsflächen 972b.

Eine darauf aufbauende Variante ist in der Figur 14 dargestellt. Diese unterscheidet sich von der Variante der Figur 13 dadurch, dass zwei koaxial in Fahrzeugquerrichtung 6 hintereinander angeordnete Rollen 974a, 974b vorgesehen sind. Hierdurch ist es möglich, eine Verformung der Rollen im Zuge der Belastung mit der Gewichtskraft des Fahrzeugs zu verhindern. Anders als die Ausführungsform der Figur 13, bei der ein Durchbiegen der Rolle 964 möglich ist, wird bei der Ausführungsform der Figur 14 durch die Gewichtskraft des Fahrzeugs lediglich die Achse der Rollen 964a, 964b leicht durchgebogen, während die Rollen 964a, 964b selbst nicht oder nur in geringerem Maße durchgebogen werden.

Die Ausführungsform 1022b der Figur 15 weist ebenfalls zwei getrennte Rollen auf 1074a, 1074b, wobei diese parallel zueinander angeordnet sind und in Fahrzeuglängsrichtung 2 voneinander beabstandet sind. Durch eine solche Ausgestaltung wird erreicht, dass das Auflage- und Führungselement 1022b, wenn es in Kontakt mit der Auflageschiene ist, eine definierte Lage einnimmt, die dadurch vorgegeben ist, dass in dieser Lage beide Rollen 1074a, 1074b an der Unterseite der Auflageschiene anliegen. Ein Verkippen des Auflage- und Führungselements 1022b und damit ein Verkippen des gesamten Kettengliedes, an dem das Auflage- und Führungselement 1022b starr befestigt ist, wird dadurch vermieden.

## Patentansprüche

1. Raupenfahrzeug, insbesondere zum Präparieren von Skipisten, mit einem Kettenantrieb mit zwei in einer Fahrzeugquerrichtung beabstandet angeordneten geschlossenen Ketten (110; 210; 310; 410; 510; 610; 710), die jeweils an einem ersten Ende um ein Antriebsrad (112; 212) und an einem zweiten Ende um ein Führungsrad (114; 214) geführt sind und die in einem bodenseitigen Kettenabschnitt (110a; 210a) zwischen dem Antriebsrad (112; 212) und dem Führungsrad (114; 214) zur bodenseitigen Auflage ausgebildet sind, wobei
zwischen den Antriebsrädern (112; 212) und den Führungsrädern (114; 214) jeweils mindestens eine sich in Fahrzeuglängsrichtung erstreckende Auflageschiene (130; 230; 330; 430; 530; 630; 730; 930; 1030) angeordnet ist, die zur permanenten Anlage an einem Kontaktabschnitt (110d; 210d; 410d; 710e, 710f, 710g) des jeweiligen bodenseitigen Kettenabschnitts (110a; 210a) ausgebildet ist, wobei an den Ketten Auflageelemente (922b; 1022b) vorgesehen sind, auf denen die Auflageschienen aufliegen, **dadurch gekennzeichnet, dass** die Auflageelemente (922b; 1022b) an ihrer Oberseite jeweils mindestens eine um einen Fahrzeugquerachse (6) drehbar gelagerte Rolle (974; 974a, 974b; 1074a, 1074b) aufweisen.

2. Raupenfahrzeug nach Anspruch 1,
**dadurch gekennzeichnet, dass**
zusätzlich zu den an den Enden angeordneten Antriebs- und Führungsrädern noch mindestens ein jeweils zwischen dem Antriebs- und dem Führungsrad angeordnetes Laufrad (316) vorgesehen ist.

3. Raupenfahrzeug nach einem der vorstehenden Ansprüche,
**dadurch gekennzeichnet, dass**
zwischen einem Chassis (202; 302; 402; 502; 602) des Raupenfahrzeugs einerseits und der jeweiligen Auflageschiene (230; 330; 430; 530; 630; 730; 930; 1030) andererseits mindestens ein Federglied (238; 338; 438; 538; 638) vorgesehen ist, welches die Auflageschiene (230; 330; 430; 530; 630; 730; 930) gegen den bodenseitigen Kettenabschnitt (210a) presst.

4. Raupenfahrzeug nach Anspruch 3,
**dadurch gekennzeichnet, dass**
das Federglied (238; 338; 438; 538; 638) derart ausgebildet ist, dass es eine translative Beweglichkeit der Auflageschiene (230; 330; 430; 530; 630; 730; 930; 1030) relativ zum Chassis (202; 302; 402; 502; 602) ausschließlich in einer durch die Fahrzeughochrichtung (4) und die Fahrzeuglängsrichtung (2) aufgespannten Ebene gestattet.

5. Raupenfahrzeug nach einem der vorstehenden Ansprüche,
**dadurch gekennzeichnet, dass**
zwischen einem Chassis (202; 302; 502; 602) des Raupenfahrzeugs einerseits und der mindestens einen Auflageschiene (230; 330; 530; 630; 730) andererseits mindestens ein Pendelglied (218, 236a; 318, 336a; 536a, 536b; 618, 636a) vorgesehen ist, welches eine Schwenkbewegung der Auflageschiene (230; 330; 530; 630; 730) um eine Fahrzeugquerachse gestattet.

6. Raupenfahrzeug nach einem der vorstehenden Ansprüche,
**dadurch gekennzeichnet, dass**
an Kettengliedern (122; 222; 622) der Ketten (110; 210; 310; 410; 510; 610; 710; 810) und/oder an den Auflageschienen (130; 230; 330; 430; 530; 630; 730) Führungsmittel (622c, 622d, 630a; 522c; 922c, 1022c) vorgesehen sind, die eine Einleitung von auf die Kette (110; 210; 310; 410; 510; 610; 710) in Fahrzeugquerrichtung (6) wirkenden Kräften in die Auflageschienen (130; 230; 330; 430; 530; 630; 730) ermöglichen.

7. Raupenfahrzeug nach Anspruch 6,
**dadurch gekennzeichnet, dass**
die Führungsmittel eine Führungsprofilierung (122b; 222b; 622b) an den Kettengliedern (122; 222; 622) umfassen, wobei diese Führungsprofilierung (122b; 222b; 622b) zwei in Fahrzeugquerrichtung beabstandete und sich in Fahrzeughochrichtung erstreckende Führungsabschnitte (622c; 522c; 922c; 1022c) aufweist, in deren Zwischenraum die Auflageschiene (130; 230; 330; 430; 530; 630; 730) eingreift.

8. Raupenfahrzeug nach einem der vorstehenden Ansprüche,
**dadurch gekennzeichnet, dass**
die Auflageschienen (130) jeweils an einem Traggestell (132) befestigt sind, wobei das Traggestell (132) jeweils zur Befestigung an mindestens einer sich in Fahrzeugquerrichtung erstreckenden Achse (118) des Raupenfahrzeugs ausgebildet ist.

9. Raupenfahrzeug nach einem der vorstehenden Ansprüche,
**dadurch gekennzeichnet, dass**
die Auflageschienen (130; 230; 330; 430; 530; 630; 730; 930) jeweils an mindestens einem Ende in Fahrzeughochrichtung nach oben gebogen sind.

10. Raupenfahrzeug nach einem der vorstehenden Ansprüche,
**dadurch gekennzeichnet, dass**
an jeder Kette mindestens zwei Auflageschienen (730) vorgesehen sind, die jeweils in einem Kontaktabschnitt (710e, 710f, 710g) zur permanenten Anlage am bodenseitigen Kettenabschnitt ausgebildet sind, wobei die Kontaktabschnitte (710e, 710f, 710g) sich in Fahrzeuglängsrichtung überlappen.

11. Raupenfahrzeug nach einem der vorstehenden Ansprüche,
**dadurch gekennzeichnet, dass**
die Auflageschienen (130; 230; 330; 430; 530; 630; 730; 930; 1030) zumindest im Bereich einer unteren Kontaktfläche (1062a), die zum Kontakt mit dem bodenseitigen Kettenabschnitt ausgebildet ist, aus einem Kunststoff bestehen.

12. Raupenfahrzeug nach einem der vorstehenden Ansprüche,
**dadurch gekennzeichnet, dass**
die Auflageschiene (130; 230; 330; 430; 530; 630; 730; 930; 1030) im Bereich seitlicher Kontaktflächen (1062b), die zum Kontakt mit den kettenseitigen und sich in Fahrzeughochrichtung erstreckenden Führungsabschnitten vorgesehen sind, aus einem Kunststoff bestehen.

13. Raupenfahrzeug nach einem der Ansprüche 11 oder 12,
**dadurch gekennzeichnet, dass**
als Kunststoff an der unteren und/oder den seitlichen Kontaktflächen (1062a, 1062b) zumindest abschnittsweise Polyamid vorgesehen ist, vorzugsweise PA 6 oder PA 12.

14. Raupenfahrzeug nach einem der Ansprüche 11 bis 13,
**dadurch gekennzeichnet, dass**
an der unteren und/oder den seitlichen Kontaktflächen (1062a, 1062b) eine Kunststoffschicht von weniger als 12mm Stärke vorgesehen ist.

15. Raupenfahrzeug nach einem der vorstehenden Ansprüche,
**dadurch gekennzeichnet, dass**
jeder Kette (110; 210; 410; 510) eine in Fahrzeuglängsrichtung ausgerichtete Stützschiene (150; 250; 450; 550) zur Führung eines bodenabgewandten Abschnitts der jeweiligen Kette zugeordnet ist.

## Claims

1. Tracked vehicle, in particular for preparing ski slopes, having a track drive with two closed tracks (110; 210; 310; 410; 510; 610; 710) arranged at a distance in a vehicle transverse direction, each passing around a drive wheel (112; 212) at a first end and around a guide wheel (114; 214) at the second end, and designed for ground-side contact in a ground-side track section (110a; 210a) between the drive wheel (112; 212) and the guide wheel (114; 214), where
at least one support rail (130; 230; 330; 430; 530; 630; 730; 930; 1030) extending in the vehicle longitudinal direction is arranged between the drive wheels (112; 212) and the guide wheels (114; 214) and is designed for permanent contact with a contact section (110d; 210d; 410d; 710e, 710f, 710g) of the respective ground-side track section (110a; 210a), where support elements (922b; 1022b) on which the support rails rest are provided on the tracks,
**characterized in that** the support elements (922b; 1022b) each have on their upper side at least one roller (974; 974a, 974b; 1074a, 1074b) mounted rotatably about a vehicle transverse axis.

2. Tracked vehicle according to Claim 1,
**characterized in that**
at least one road wheel (316) arranged between the drive wheel and the guide wheel is provided in addition to the drive wheels and guide wheels arranged at the ends.

3. Tracked vehicle according to one of the preceding claims,
**characterized in that**
at least one spring member (238; 338; 438; 538; 638) is provided between a chassis (202; 302; 402; 502; 602) of the tracked vehicle on the one hand and the respective support rail (230; 330; 430; 530; 630; 730; 930; 1030) on the other hand and presses the support rail (230; 330; 430; 530; 630; 730; 930) against the ground-side track section (210a).

4. Tracked vehicle according to Claim 3,
**characterized in that**
the spring member (238; 338; 438; 538; 638) is designed such that it permits a translatory movability of the support rail (230; 330; 430; 530; 630; 730; 930; 1030) relative to the chassis (202; 302; 402; 502; 602) exclusively in a plane formed by the vehicle vertical direction (4) and the vehicle longitudinal direction (2).

5. Tracked vehicle according to one of the preceding claims,
**characterized in that**
at least one pivoting member (218, 236a; 318, 336a; 536a, 536b; 618a, 636a) is provided between a chassis (202; 302; 502; 602) of the tracked vehicle on the one hand and the at least one support rail (230; 330; 530; 630; 730) on the other hand and permits a swivel movement of the support rail (230; 330; 530; 630; 730) about a vehicle transverse axis.

6. Tracked vehicle according to one of the preceding claims,
**characterized in that**
guide means (622c, 622d, 630a; 522c; 922c, 1022c) are provided on track members (122; 222; 622) of the tracks (110; 210; 310; 410; 510; 610; 710; 810) and/or on the support rails (130; 230; 330; 430; 530; 630; 730) and permit a transmission of forces acting on the track (110; 210; 310; 410; 510; 610; 710) in the vehicle transverse direction (6) into the support rails (130; 230; 330; 430; 530; 630; 730).

7. Tracked vehicle according to Claim 6,
**characterized in that**
the guide means comprise a guide profile (122b; 222b; 622b) on the track links (122; 222; 622), where said guide profile (122b; 222b; 622b) has two guide sections (622c; 522c; 922c; 1022c) at a distance in the vehicle transverse direction and extending in the vehicle vertical direction and in the spaces between which the support rail (130; 230; 330; 430; 530; 630; 730) engages.

8. Tracked vehicle according to one of the preceding claims,
**characterized in that**
the support rails (130) are each fastened to a holding frame (132), said holding frame (132) being designed for attachment to at least one axis (118) of the tracked vehicle extending in the vehicle transverse direction.

9. Tracked vehicle according to one of the preceding claims,
**characterized in that**
the support rails (130; 230; 330; 430; 530; 630; 730; 930) are each curved vertically upwards at at least one end in the vehicle vertical direction.

10. Tracked vehicle according to one of the preceding claims,
**characterized in that**
at least two support rails (730) are provided at each track that are each designed in one contact section (710e, 710f, 710g) for permanent contact with the ground-side track section, where the contact sections (710e, 710f, 710g) overlap in the vehicle longitudinal direction.

11. Tracked vehicle according to one of the preceding claims,
**characterized in that**
the support rails (130; 230; 330; 430; 530; 630; 730; 930; 1030) consist of a plastic at least in the area of a lower contact surface (1062a) designed for contact with the ground-side track section.

12. Tracked vehicle according to one of the preceding claims,
**characterized in that**
the support rails (130; 230; 330; 430; 530; 630; 730; 930; 1030) consist of a plastic in the area of lateral contact surfaces (1062b) which are intended for contact with the track-side guide sections extending in the vehicle vertical direction.

13. Tracked vehicle according to one of the Claims 11 or 12,
**characterized in that**
at least in some sections polyamide, preferably PA 6 or PA 12, is provided as the plastic on the lower and/or lateral contact surfaces (1 062a, 1062b).

14. Tracked vehicle according to one of the Claims 11 to 13,
**characterized in that**
a plastic layer of less than 12 mm thickness is provided on the lower and/or lateral contact surfaces (1062a, 1062b).

15. Tracked vehicle according to one of the preceding claims,
**characterized in that**
each track (110; 210; 410; 510) is assigned a supporting rail (150; 250; 450; 550) aligned in the vehicle longitudinal direction for guidance of a section of the respective track away from the ground.

## Revendications

1. Véhicule à chenilles, en particulier pour préparer des pistes de ski, muni d'un entraînement par chenilles avec deux chenilles fermées (110 ; 210 ; 310 ; 410 ; 510 ; 610 ; 710) distantes l'une de l'autre dans un sens transversal du véhicule, passant respectivement à une première extrémité autour d'une roue menante (112 ; 212) et à une seconde extrémité autour d'une roue guidante (114 ; 214), et qui sont conçues pour s'appuyer sur le sol le long d'une partie de chenille côté sol (110a ; 210a) entre la roue menante (112 ; 212) et la roue guidante (114 ; 214),
dans lequel,
entre les roues menantes (112 ; 212) et les roues guidantes (114 ; 214) respectives, est disposée au moins une barre d'appui (130 ; 230 ; 330 ; 430 ; 530 ; 630 ; 730 ; 930 ; 1030) s'étendant dans le sens longitudinal du véhicule et conçue pour s'appuyer en permanence sur une section de contact (110d ; 210d ; 410d ; 710e, 710f, 710g) des parties de chenille côté sol respectives (110a ; 210a), sachant que sur les chenilles sont prévus des éléments d'appui (922b ; 1022b) sur lesquels reposent les barres d'appui,
**caractérisé en ce**
**que** les éléments d'appui (922b ; 1022b) présentent respectivement sur leur partie supérieure au moins un galet (974 ; 974a, 974b ; 1074a, 1074b) logé de manière à pouvoir pivoter autour d'un axe transversal du véhicule (6).

2. Véhicule à chenilles selon la revendication 1,
**caractérisé en ce**
**qu'**en plus des roues menantes et guidantes placées aux extrémités, est respectivement prévue au moins une roue porteuse (316) disposée entre la roue menante et la roue guidante.

3. Véhicule à chenilles selon l'une des revendications précédentes,
**caractérisé en ce**
**qu'**entre un châssis (202 ; 302 ; 402 ; 502 ; 602) du véhicule à chenilles d'une part et chaque barre d'appui (230 ; 330 ; 430 ; 530 ; 630 ; 730 ; 930 ; 1030) d'autre part est prévu au moins un organe à ressort (238 ; 338 ; 438 ; 538 ; 638) qui presse la barre d'appui (230 ; 330 ; 430 ; 530 ; 630 ; 730 ; 930) contre la partie de chenille côté sol (210a).

4. Véhicule à chenilles selon la revendication 3,
**caractérisé en ce**
**que** l'organe à ressort (238 ; 338 ; 438 ; 538 ; 638) est conçu de manière telle qu'il permet une mobilité de translation de la barre d'appui (230 ; 330 ; 430 ; 530 ; 630 ; 730 ; 930 ; 1030) par rapport au châssis (202 ; 302 ; 402 ; 502 ; 602) exclusivement dans un plan défini par le sens vertical du véhicule (4) et le sens longitudinal du véhicule (2).

5. Véhicule à chenilles selon l'une des revendications précédentes,
**caractérisé en ce**
**qu'**entre un châssis (202 ; 302 ; 502 ; 602) du véhicule à chenilles d'une part et l'au moins une barre d'appui (230 ; 330 ; 530 ; 630 ; 730) d'autre part est prévu au moins un organe pendulaire (218, 236a ; 318, 336a ; 536a, 536b ; 618, 636a) qui permet un mouvement oscillant de la barre d'appui (230 ; 330 ; 530 ; 630 ; 730) autour d'un axe transversal du véhicule.

6. Véhicule à chenilles selon l'une des revendications précédentes,
**caractérisé en ce**
**que** sur des patins (122 ; 222 ; 622) des chenilles (110 ; 210 ; 310 ; 410 ; 510 ; 610 ; 710 ; 810) et/ou sur les barres d'appui (130 ; 230 ; 330 ; 430 ; 530 ; 630 ; 730) sont prévus des moyens de guidage (622c, 622d, 630a ; 522c ; 922c, 1022c) qui permettent une introduction dans les barres d'appui (130 ; 230 ; 330 ; 430 ; 530 ; 630 ; 730) des forces agissant sur la chenille (110 ; 210 ; 310 ; 410 ; 510 ; 610 ; 710) dans le sens transversal du véhicule (6).

7. Véhicule à chenilles selon la revendication 6,
**caractérisé en ce**
**que** les moyens de guidage comprennent un profil de guidage (122b ; 222b ; 622b) sur les patins (122 ; 222 ; 622), sachant que ce profil de guidage (122b ; 222b ; 622b) présente deux sections de guidage (622c ; 522c ; 922c ; 1022c) distantes l'une de l'autre dans le sens transversal du véhicule et s'étendant dans le sens vertical du véhicule, entre lesquelles s'engage la barre d'appui (130 ; 230 ; 330 ; 430 ; 530 ; 630 ; 730).

8. Véhicule à chenilles selon l'une des revendications précédentes,
**caractérisé en ce**
**que** les barres d'appui (130) respectives sont fixées à un support (132), sachant que chaque support (132) est conçu pour être fixé à au moins un axe (118) du véhicule à chenilles s'étendant dans le sens transversal du véhicule.

9. Véhicule à chenilles selon l'une des revendications précédentes,
**caractérisé en ce**
**que** les barres d'appui (130; 230 ; 330 ; 430 ; 530 ; 630 ; 730 ; 930) respectives sont courbées vers le haut dans le sens vertical du véhicule à au moins une extrémité.

10. Véhicule à chenilles selon l'une des revendications précédentes,
**caractérisé en ce**
**que** pour chaque chenille sont prévues au moins deux barres d'appui (730) respectivement formées dans une section de contact (710e, 710f, 710g) pour un appui permanent sur la partie de chenille côté sol, sachant que les sections de contact (710e, 710f, 710g) se chevauchent dans le sens longitudinal du véhicule.

11. Véhicule à chenilles selon l'une des revendications précédentes,
**caractérisé en ce**
**que** les barres d'appui (130 ; 230 ; 330 ; 430 ; 530 ; 630 ; 730 ; 930) sont constituées d'une matière synthétique au moins dans la zone d'une surface de contact inférieure (1062a) formée pour le contact avec la partie de chenille côté sol.

12. Véhicule à chenilles selon l'une des revendications précédentes,
**caractérisé en ce**
**que** les barres d'appui (130 ; 230 ; 330 ; 430 ; 530 ; 630 ; 730 ; 930 ; 1030) sont constituées d'une matière synthétique dans la zone des surfaces de contact latérales (1062b) prévues pour le contact avec les sections de guidage côté chenille et s'étendant dans le sens vertical du véhicule.

13. Véhicule à chenilles selon l'une des revendications 11 ou 12,
**caractérisé en ce**
**que** comme matière synthétique sur les surfaces de contact inférieures et/ou latérales (1062a, 1062b) est prévu au moins partiellement du polyamide, de préférence du PA 6 ou du PA 12.

14. Véhicule à chenilles selon l'une des revendications 11 à 13,
**caractérisé en ce**
**que** sur les surfaces de contact inférieures et/ou latérales (1062a, 1062b) est prévue une couche de matière synthétique d'une épaisseur inférieure à 12 mm.

15. Véhicule à chenilles selon l'une des revendications précédentes,
**caractérisé en ce**
**qu'**à chaque chenille (110 ; 210 ; 410 ; 510) est associée une barre de soutien (150 ; 250 ; 450 ; 550) orientée dans le sens longitudinal du véhicule et destinée à guider une partie opposée au sol de chaque chenille.
